# EUROPÄISCHE PATENTSCHRIFT

(11) **EP 1 751 634 B1**
(45) Veröffentlichungstag und Bekanntmachung des Hinweises auf die Patenterteilung: **12.07.2017**
(21) Anmeldenummer: 05747740.8
(22) Anmeldetag: 11.05.2005
(51) Int. Cl.: G05B 19/042, G05B 9/00, G05B 23/02

(54) **VERFAHREN ZUR ÜBERWACHUNG EINES VERBUNDES VON STEUERGERÄTEN**
METHOD FOR MONITORING A SET OF CONTROLLERS
PROCEDE POUR SURVEILLER UNE LIAISON ENTRE DES ORGANES DE COMMANDE

(30) Priorität: 18.05.2004 DE 102004024536
(43) Veröffentlichungstag der Anmeldung: 14.02.2007
(73) Patentinhaber: ROBERT BOSCH GMBH, 70442 Stuttgart (DE)
(72) Erfinder: RUEGER, Johannes-Joerg, 1130 Wien (AT); SCHULZ, Udo, 71665 Vaihingen/Enz (DE)
(86) Internationale Anmeldenummer: PCT/EP2005/052153
(87) Internationale Veröffentlichungsnummer: WO 2005/114341

(56) Entgegenhaltungen:
- DE-A1- 3 720 385
- DE-A1- 4 317 729
- DE-A1- 10 223 880
- US-A- 4 347 563

## Beschreibung

Die Erfindung betrifft ein Verfahren zum Betrieb eines Systems, ein System, das eine Anzahl Steuergeräte aufweist sowie ein Computerprogramm und ein Computerprogrammprodukt zur Durchführung des Verfahrens.

### Stand der Technik

Moderne Fahrzeuge weisen Systeme mit einer immer größer werdenden Anzahl unterschiedlicher, miteinander vernetzter Steuergeräte auf. In einem solchen System kann sich ein Fehler innerhalb eines der Steuergeräte unvorteilhaft auf eine Funktion anderer Steuergeräte oder gar auf das gesamte System auswirken.

In der Druckschrift DE 41 18 692 C2 wird eine Vorrichtung zur Fehlerspeicherung in einer Steuereinrichtung eines Kraftfahrzeugs vorgestellt. Diese Vorrichtung umfaßt eine Fehlerzeit-Zähleinrichtung zum Erfassen der jeweiligen Zeitspanne, in der ein Fehler andauert, und einen Fehlerspeicher zum Abspeichern von Informationen für Fehler.

Die Druckschrift DE 100 36 278 A1 beschreibt ein Verfahren zur Überwachung eines Programmablaufs mittels einer Debug-Logik. Um eine besonders zuverlässige, aber dennoch möglichst ressourcenschonende Überwachung eines Ablaufs eines auf einem Mikroprozessor ablauffähigen Programms bereitzustellen, wird hierbei vorgeschlagen, daß die Debug-Logik von dem Mikroprozessor konfiguriert wird und von der Debug-Logik nach einem Auslösen einer Ausnahmebedingung während einer Programmlaufzeit eine Ausnahmebedingungsroutine (Exception-Routine) unterzogen wird.

Die Druckschrift DE 37 20 385 A1 beschreibt ein Verfahren zum Betrieb eines redundanten Systems, das zwei Steuergeräte umfasst die sich gegenseitig überwachen. Dazu werden zwischen den Steuergeräten bestimmte Signale ausgetauscht, die dann wechselseitig ausgewertet werden. Wird hierbei eine Anomalität festgestellt, wird auf ein Versagen des jeweiligen Steuergeräts geschlossen und ein Betrieb auf das jeweils andere Steuergerät umgestellt.

Mit vorliegender Erfindung wird angestrebt, Auswirkungen von Fehlern innerhalb einzelner Steuergeräte eines Systems auf eine Funktion des gesamten Systems zu minimieren.

Hierzu wird ein Verfahren mit den Merkmalen des Patentanspruchs 1, ein System mit den Merkmalen des Patentanspruchs 6, ein Computerprogramm mit den Merkmalen des Patentanspruchs 8 und ein Computerprogrammprodukt mit den Merkmalen des Patentanspruchs 9 vorgeschlagen.

### Vorteil der Erfindung

Das erfindungsgemäße Verfahren ist zum Betrieb eines Systems vorgesehen, das eine Anzahl Steuergeräte umfasst, wobei für den Fall, dass für eines der Steuergeräte ein besonderer Zustand vorliegt, mindestens eines der anderen Steuergeräte über das Vorliegen eines besonderen Zustandes des Steuergeräts informiert wird, wobei für das eine Steuergerät eine Maßnahme ergriffen wird. Weiterhin wird mindestens eines der anderen Steuergeräte vor einer Durchführung der Maßnahme über Art und Dauer des besonderen Zustands informiert.

Bei dem erfindungsgemäßen Verfahren zum Betrieb eines Systems, das eine Anzahl Steuergeräte umfasst, ist vorgesehen, dass für den Fall, dass für eines der Steuergeräte ein besonderer Zustand vorliegt, mindestens eines der anderen Steuergeräte darüber informiert wird. Jedes einzelne Steuergerät kann bei Betrieb des Systems, ob nun beabsichtigt oder unbeabsichtigt, in besagten besonderen Zustand geraten, bei dem eine Funktion dieses Steuergeräts von einer Standardfunktion zumindest teilweise abweicht. Durch die erfindungsgemäße Vorgehensweise wird erreicht, dass das mindestens eine der anderen Steuergeräte über den geänderten Zustand unterrichtet wird und seine Funktion an diesen besonderen Zustand anpasst und Informationen, die das eine der Steuergeräte bei Vorliegen des besonderen Zustands weiterleitet, unter entsprechender Berücksichtigung dieses besonderen Zustands registriert bzw. weiterverarbeitet. Das Verfahren eignet sich z.B. für Systeme, bei denen eine Software auf mehrere Steuergeräte verteilt ist.

In bevorzugter Ausgestaltung der Erfindung ist vorgesehen, daß das Verfahren bei einem durch einen Fehler des einen der Steuergeräte hervorgerufenen besonderen Zustand durchgeführt wird. Dies eignet sich insbesondere für Fehlerzustände, bei denen eine Kommunikation des betroffenen Steuergeräts mit den anderen Steuergeräten für eine gewissen Zeitspanne nicht mehr aufrecht erhalten werden kann. Hierzu gehören auch Zustände des Steuergeräts, bei denen dieses unzuverlässige bzw. undefinierte Werte ausgibt. Die anderen Steuergeräte sind nun vor einem Auftreten derartiger Werte gewarnt.

Es ist vorzugsweise vorgesehen, daß für das eine Steuergerät eine Maßnahme, insbesondere eine Maßnahme zur Behandlung des Fehlers, ergriffen wird. Ein typisches Beispiel für derartige Maßnahmen sind Wiederherstellungen, sogenannte Recoveries, bei denen das jeweilige Steuergerät per Hardware- oder Software-Reset neu initialisiert wird. Recoveries werden bspw. aktiv von einer Funktion der Software ausgelöst, wenn eine Software-Statement-Maschine Zustandswerte annimmt, die nicht definiert sind. Jede Recovery weist in der Regel eine eigene Recovery-Nummer auf, die über einen Reset hinaus gerettet wird und damit für eine Diagnose und Fehlerreaktionen zur Verfügung steht.

Üblicherweise werden in Abhängigkeit von der Recovery-Nummer Steuergeräte-Eigentests, zum Beispiel RAM-Tests usw., durchgeführt. Gleichzeitig mit der Recovery-Nummer wird auch eine Häufigkeit der jeweiligen Recovery-Nummer gerettet. Somit kann mit entsprechendem Auftreten derselben Recovery pro Zeitintervall das Steuergerät in einen Sleep-Modus überführt werden, falls die Recovery keine Abhilfe für den Fehler gebracht hat. Damit in derartigen Situationen nicht sofort sämtliche Steuergeräte einen Fehler melden und möglicherweise die entsprechenden anhängigen Funktionen abschalten, wird bei diesen Steuergeräten versucht, über Time-Outs entsprechende Totzeiten in der Kommunikation zu überbrücken. Erst wenn die Kommunikation länger ausbleiben sollte, als mit dem Time-Out appliziert wurde, kann eine entsprechende Systemreaktion erfolgen.

Erfindungsgemäß werden Informationen, daß es zu einer Exception, also einem Fehler und/oder einer Recovery gekommen ist, gezielt genutzt, indem die Informationen darüber an mindestens eines der anderen Steuergeräte weitergeleitet werden. Die Recovery bzw. eine Neuinitialisierung des einen Steuergeräts dient zur Behebung des Fehlers dieses Steuergeräts. Es kann jedoch auch vorgesehen sein, daß derartige Maßnahmen routinemäßig oder aufgrund eines nicht zwangsläufig mit einem Fehler verbundenen Anlasses, wie bspw. einer Überprüfung des Steuergeräts, ergriffen werden. Da dabei eine Funktion dieses Steuergeräts beeinträchtigt wird, werden die anderen Steuergeräte entsprechend informiert.

Das mindestens eine der anderen Steuergeräte wird in bevorzugter Ausgestaltung der Erfindung vor einer Durchführung der Maßnahme informiert. Hierbei wird das mindestens eine andere Steuergerät vorzugsweise über eine Dauer des besonderen Zustands informiert. Die Dauer kann in Abhängigkeit der Art des besonderen Zustands ermittelt werden. Somit wird durch Nutzung derartiger Informationen ein Systemverhalten und eine Fehlerzuordnung verbessert. Das Steuergerät, bei dem ein Fehler auftritt und/oder bei dem eine Maßnahme zu ergreifen ist, versendet die Information darüber, bevor die Maßnahme durchgeführt wird. Dadurch, daß auch eine Information über die Dauer mitversandt wird, ist dem mindestens einen anderen Steuergerät des Systems bekannt, wann sich das eine Steuergerät wieder in einem Normalzustand befinden und wieder zuverlässig arbeiten wird.

Die Dauer läßt sich bspw. durch Addition der Laufzeiten der applizierten Eigentests nach der Maßnahme bzw. Recovery oder aufgrund der Recovery-Nummer oder sonstigen Initialisierungsroutinen genau abschätzen bzw. durch Laufzeitmessungen nach einem aktiven Auslösen der jeweiligen Recoveries vor einer Auslieferung des Systems oder der Software bestimmen und in dem Steuergerät abspeichern.

Somit werden auch Fehler, die mit einer Vernetzung einer Vielzahl von Steuergeräten innerhalb eines Systems verbunden sind, gelöst. Die Erfindung bietet sich für Systeme an, bei denen Systemfunktionen übergreifend auf verschiedenen Steuergeräten realisiert werden.

In Ausgestaltung der Erfindung wird unter Berücksichtigung der Art des besonderen Zustand entschieden, ob eine Zusatzmaßnahme durch das mindestens eine der anderen Steuergeräte ergriffen wird. Die von dem einen Steuergeräte weitergeleiteten Informationen können z.B. direkt von relevanten Steuergeräten aufgenommen werden. Dort kann in Kenntnis der voraussichtlichen Dauer bis zu einer Wiederaufnahme der Kommunikation entschieden werden, ob eine Systemreaktion, also die Zusatzmaßnahme, erforderlich ist oder ob der besondere Zustand des einen Steuergeräts in einer jeweiligen Betriebssituation des Systems toleriert werden kann. Hierbei ist möglich, eine Toleranzschwelle, die von einer aktuellen Systemfunktion und/oder der Art des besonderen Zustands abhängig ist, zu definieren. Folglich kann die Systemreaktion gezielt erfolgen und die Systemreaktion sofort ausgeführt werden, wenn klar sein sollte, daß die Dauer der Maßnahme oder Exception zu lange andauert. Bislang mußte hierfür erst ein Ablauf des Time-Outs abgewartet werden.

Mit der Erfindung ist nunmehr eine Ursache für eine Systemreaktion eindeutig zuzuordnen. Somit werden mehrdeutige Folgefehler bzw. Fehlerspeichereinträge vermieden. Die Applikation eines festen, betriebspunktunabhängigen Time-Outs entfällt.

Das erfindungsgemäße System weist eine Anzahl Steuergeräte auf. Für den Fall, daß für eines der Steuergeräte ein besonderer Zustand vorliegt, ist mindestens eines der anderen Steuergeräte darüber zu informieren. Die Erfindung ist bspw. für Systeme innerhalb von Fahrzeugen geeignet. Eine Software des Systems ist hierbei auf mehrere Steuergeräte verteilt. Über diese Steuergeräte werden Funktionen wie Cruise-Control (ACC), ABS, ASR und dergleichen realisiert. Ein für eine entsprechende Funktion zuständiges Steuergerät gibt Momentanforderungen an ein Motorsteuergerät weiter, das diese bspw. zur Bereitstellung einer geeigneten Einspritzmenge für den Motor umsetzt. Die Steuergeräte des Systems sind vorzugsweise über ein Kommunikationsmittel wie bspw. CAN (Controller Area Method) miteinander verbunden bzw. vernetzt.

Das erfindungsgemäße Computerprogramm mit Programmcodemitteln ist zur Durchführung aller Schritte des erfindungsgemäßen Verfahrens vorgesehen, wenn das Computerprogramm auf einem Computer oder einer entsprechenden Recheneinheit, insbesondere einem Steuergerät in dem erfindungsgemäßen System durchgeführt wird. Entsprechend ist ein Computerprogrammprodukt mit Programmcodemitteln, die auf einem computerlesbaren Datenträger gespeichert sind, zur Durchführung des erfindungsgemäßen Verfahrens vorgesehen, wenn das Computerprogrammprodukt auf einem Computer oder einer entsprechenden Recheneinheit, insbesondere einem Steuergerät, in dem erfindungsgemäßen System durchgeführt wird.

In Ausgestaltung der Erfindung ist es möglich, die Behandlung des besonderen Zustands (Exception-Handling) in einem übergeordneten Steuergerät, z.B. SG CAN-Gateway zu konzentrieren. In diesem übergeordneten Steuergerät werden alle Informationen über derartige besondere Betriebszustände gesammelt und auf dieser Grundlage optimale Systemreaktionen ausgelöst. In einer solchen konzentrierten Lösung ist zudem eine übergreifende Fehlerspeicherung realisierbar, so daß die heute vielfältigen und schwer deutbaren Fehlerspeichereinträge sämtlicher Steuergeräte entfallen und eine Fehlersuche vereinfacht wird. Des weiteren ist denkbar, das Exception-Handling redundant in mehreren Steuergeräten abzulegen und somit dessen Verfügbarkeit zu erhöhen.

Mit der Erfindung wird das bislang praktizierte Konzept einer Applikation des Time-Outs verbessert. Bei zunehmender Vernetzung der Systemfunktionen erweist es sich als immer schwerer, eine in allen Betriebszuständen sinnvolle Applikation zur Behandlung besonderer Zustände zu finden. Falls zudem der besondere Zustand länger als das vorgesehene Time-Out andauern sollte, ergibt sich bei herkömmlichen Systemen, daß sämtliche Steuergeräte Fehler bzw. Folgefehler eintragen und eine Fehlersuche entsprechend erschwert wird. Bislang ungenutzte wertvolle Informationen, also Informationen darüber, daß das Steuergerät demnächst ein Recovery auslösen wird oder daß allgemein ein besonderer Zustand für dieses Steuergerät auftritt und wie lange dies andauern wird, bis das Steuergerät wieder betriebsbereit ist, werden mit der Erfindung vorteilhafterweise genutzt. Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.

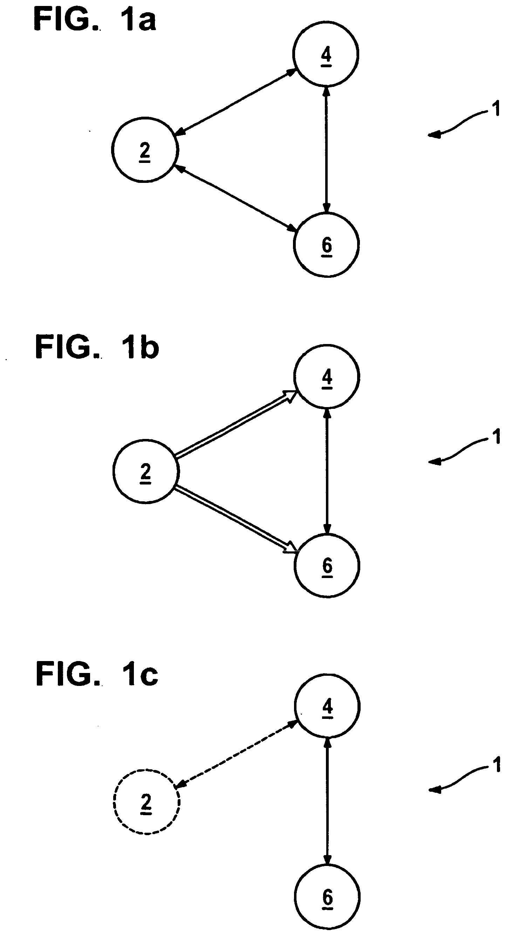

Figur 1 zeigt ein erfindungsgemäßes System in bevorzugter Ausgestaltung während verschiedener Zustände bei einer Ausführung des erfindungsgemäßen Verfahrens in schematischer Darstellung.

Figur 1a zeigt das erfindungsgemäße System 1, das in diesem Fall drei Steuergeräte 2, 4, 6 umfaßt. Diese Steuergeräte 2, 4, 6 sind vorzugsweise innerhalb eines Fahrzeugs angeordnet. Eine Software zur Realisierung eines Betriebs des Systems 1 kann dabei auf eines oder mehrere der Steuergeräte 2, 4, 6 verteilt sein. Die Steuergeräte 2, 4, 6 sind miteinander vernetzt und hierfür über gemeinsame Kommunikationsmittel oder -pfade wie bspw. CAN miteinander verbunden. Bei Betrieb des Systems 1 ist vorgesehen, daß zwischen den Steuergeräten 2, 4, 6 eine Kommunikation erfolgt. Hierzu werden, verdeutlicht durch die Doppelpfeile, zwischen den Steuergeräten 2, 4, 6 Informationen ausgetauscht.

Figur 1b zeigt eine Situation, bei der in diesem Beispiel für das Steuergerät 2 ein besonderer Zustand erreicht ist, vorliegt oder bevorsteht. Dies kann bedeuten, daß dieses Steuergerät 2 einen Fehler hat, der durch eine geeignete Maßnahme zu beheben ist. Alternativ ist auch möglich, daß diese Maßnahme unabhängig von einem Fehler bspw. im Rahmen einer Routinekontrolle dieses Steuergeräts 2 ansteht. Im Rahmen dieser Maßnahme ist vorgesehen, daß für dieses Steuergerät 2 eine Recovery, insbesondere ein Hardware- oder Software-Reset oder eine Neuinitialisierung vorgenommen wird. Eine Information darüber wird von dem Steuergerät 2, wie durch die gestrichelten Pfeile verdeutlicht ist, an die anderen Steuergeräte 4, 6 vor Durchführung der Maßnahme weitergeleitet. Hierbei wird diesen anderen Steuergeräten 4, 6 zusätzlich mitgeteilt, wie lange diese Maßnahme andauert.

Figur 1c zeigt das System 1 während des besonderen Zustands, bei dem für das Steuergerät 2 die Maßnahme durchgeführt wird. Eine Kommunikation zwischen dem Steuergerät 2 und den anderen Steuergeräten 6 ist in diesem Fall nur noch in eingeschränktem Maße möglich. So findet zwischen dem Steuergerät 2 und dem Steuergerät 6 bspw. gar keine Kommunikation mehr statt. Zwischen dem Steuergerät 2 und dem Steuergerät 4 werden, wie durch den gestrichelten Doppelpfeil verdeutlicht, zwar noch Informationen ausgetauscht, doch diese können aufgrund des besonderen Zustands, in dem sich das Steuergerät 2 befindet, fehlerhaft sein.

Durch die erfindungsgemäße Maßnahme, den besonderen Zustand des Steuergeräts 2 wie in der Figur 1c schematisch dargestellt, den anderen Steuergeräten 4, 6, wie in der Figur 1b schematisch dargestellt, rechtzeitig vorab anzukündigen, wirkt sich der besondere Zustand des Steuergeräts 2 nicht auf den Betrieb des gesamten Systems 1 aus, da die anderen Steuergeräte 4, 6 über diesen besonderen Zustand des Steuergeräts 1 vorab informiert wurden, so daß diese diesen besonderen Zustand berücksichtigen. Sobald das Steuergerät 2 nach Behebung des Fehlers und/oder Durchführung der Maßnahme wieder voll funktionstüchtig ist, ist, wie in Figur 1a dargestellt, wieder eine reguläre Kommunikation zwischen sämtlichen Steuergeräten 2, 4, 6 innerhalb des Systems 1 möglich.

## Patentansprüche

1. Verfahren zum Betrieb eines Systems (1), das eine Anzahl Steuergeräte (2, 4, 6) umfasst, wobei für den Fall, dass für eines der Steuergeräte (2) ein besonderer Zustand vorliegt, mindestens eines der anderen Steuergeräte (4, 6) über das Vorliegen eines besonderen Zustandes des Steuergeräts (2) informiert wird, wobei für das eine Steuergerät (2) eine Maßnahme ergriffen wird,
**dadurch gekennzeichnet, dass** mindestens eines der anderen Steuergeräte (4, 6) vor einer Durchführung der Maßnahme über Art und Dauer des besonderen Zustands informiert wird.

2. Verfahren nach Anspruch 1, das bei einem durch einen Fehler des einen Steuergeräts (2) hervorgerufenen besonderen Zustand durchgeführt wird.

3. Verfahren nach Anspruch 2, bei dem die Maßnahme zur Behandlung des Fehlers durchgeführt wird.

4. Verfahren nach Anspruch 1, bei dem die Dauer in Abhängigkeit von der Art des besonderen Zustands ermittelt wird.

5. Verfahren nach einem der vorstehenden Ansprüche, bei dem unter Berücksichtigung der Art des besonderen Zustands entschieden wird, ob eine Zusatzmaßnahme durch das mindestens eine der anderen Steuergeräte (4, 6) ergriffen wird.

6. System, das eine Anzahl Steuergeräte (2, 4, 6) umfasst, die über Kommunikationsmittel miteinander verbunden sind, wobei das System (1) derart ausgestaltet ist, dass für den Fall, dass für eines der Steuergeräte (2) ein besonderer Zustand vorliegt, mindestens einem der anderen Steuergeräte (4, 6) eine Information vor der Durchführung einer Maßnahme über das Vorliegen eines besonderen Zustandes des Steuergeräts (2) und über eine Art und eine Dauer des besonderen Zustandes mittels der Kommunikationsmittel zugeht.

7. System nach Anspruch 6, wobei als Kommunikationsmittel ein CAN-Bus (Controller Area Network) verwendet wird.

8. Computerprogramm mit Programmcodemitteln, um alle Schritte eines Verfahrens nach einem der Ansprüche 1 bis 5 durchzuführen, wenn das Computerprogramm auf einem Computer oder einer entsprechenden Recheneinheit, insbesondere einem Steuergerät (2, 4, 6) in einem System (1) nach Anspruch 6, durchgeführt wird.

9. Computerprogrammprodukt mit Programmcodemitteln, die auf einem computerlesbaren Datenträger gespeichert sind, um ein Verfahren nach einem der Ansprüche 1 bis 4 durchzuführen, wenn das Computerprogramm auf einem Computer oder einer entsprechenden Recheneinheit, insbesondere einem Steuergerät (2, 4, 6) in einem System (1) nach Anspruch 6, durchgeführt wird.

## Claims

1. Method for operating a system (1) comprising a number of control devices (2, 4, 6), wherein, if a special state is present for one of the control devices (2), at least one of the other control devices (4, 6) is informed of the presence of a special state of the control device (2), wherein a measure is taken for the one control device (2), **characterized in that** at least one of the other control devices (4, 6) is informed of the type and duration of the special state before carrying out the measure.

2. Method according to Claim 1, which is carried out in the event of a special state caused by a fault in the one control device (2).

3. Method according to Claim 2, in which the measure for handling the fault is carried out.

4. Method according to Claim 1, in which the duration is determined on the basis of the type of special state.

5. Method according to one of the preceding claims, in which a decision is made, taking into account the type of special state, as to whether an additional measure is taken by the at least one of the other control devices (4, 6).

6. System comprising a number of control devices (2, 4, 6) which are connected to one another via communication means, wherein the system (1) is configured in such a manner that, if a special state is present for one of the control devices (2), at least one of the other control devices (4, 6) is provided with an item of information relating to the presence of a special state of the control device (2) and relating to a type and duration of the special state by means of the communication means before carrying out a measure.

7. System according to Claim 6, wherein a CAN (Controller Area Network) bus is used as communication means.

8. Computer program having program code means for carrying out all of the steps of a method according to one of Claims 1 to 5 when the computer program is carried out on a computer or a corresponding computing unit, in particular a control device (2, 4, 6) in a system (1) according to Claim 6.

9. Computer program product having program code means which are stored on a computer-readable data storage medium in order to carry out a method according to one of Claims 1 to 4 when the computer program is carried out on a computer or a corresponding computing unit, in particular a control device (2, 4, 6) in a system (1) according to Claim 6.

## Revendications

1. Procédé pour faire fonctionner un système (1) qui comprend une pluralité de contrôleurs (2, 4, 6), procédé selon lequel, dans le cas où il existe un état particulier pour l'un des contrôleurs (2), au moins l'un des autres contrôleurs (4, 6) est informé à propos d'un état particulier du contrôleur (2), une disposition étant prise pour ledit contrôleur (2), **caractérisé en ce qu'**au moins l'un des autres contrôleurs (4, 6) est informé à propos de la nature et de la durée de l'état particulier avant une exécution de la disposition.

2. Procédé selon la revendication 1, lequel est mis en oeuvre en présence d'un état particulier provoqué par un défaut dudit contrôleur (2).

3. Procédé selon la revendication 2, avec lequel la disposition est exécutée pour gérer le défaut.

4. Procédé selon la revendication 1, avec lequel la durée est déterminée en fonction de la nature de l'état particulier.

5. Procédé selon l'une des revendications précédentes, avec lequel il est décidé, en tenant compte de la nature de l'état particulier, si une disposition supplémentaire est prise par l'au moins un des autres contrôleurs (4, 6).

6. Système comprenant une pluralité de contrôleurs (2, 4, 6) qui sont reliés entre eux par le biais de moyens de communication, le système (1) étant configuré de telle sorte que dans le cas où il existe un état particulier pour l'un des contrôleurs (2), une information à propos de la présence d'un état particulier du contrôleur (2) et à propos d'une nature et d'une durée de l'état particulier parvient à au moins l'un des autres contrôleurs (4, 6) avant l'exécution d'une disposition par le biais de moyens de communications.

7. Système selon la revendication 6, les moyens de communication utilisés étant un bus CAN (Controller Area Network - Gestionnaire de réseau de communication).

8. Programme informatique comprenant des moyens de code de programme afin d'exécuter toutes les étapes d'un procédé selon l'une des revendications 1 à 5 lorsque le programme informatique est exécuté sur un ordinateur ou sur une unité de calcul correspondante, notamment un contrôleur (2, 4, 6) dans un système (1) selon la revendication 6.

9. Produit de programme informatique comprenant des moyens de code de programme qui sont enregistrés sur un support de données lisible par ordinateur, afin de mettre en oeuvre un procédé selon l'une des revendications 1 à 4 lorsque le programme informatique est exécuté sur un ordinateur ou sur une unité de calcul correspondante, notamment un contrôleur (2, 4, 6) dans un système (1) selon la revendication 6.
